# EUROPEAN PATENT SPECIFICATION

(11) **EP 1 686 452 B1**
(45) Date of publication and mention of the grant of the patent: **10.04.2013**
(21) Application number: 05010617.8
(22) Date of filing: 17.05.2005
(51) Int. Cl.: G06F 3/06, G06F 3/048, H04N 1/00

(54) **Data management method**
Datenverwaltungsverfahren
Procédé de gestion de données

(30) Priority: 31.01.2005 US 45054
(43) Date of publication of application: 02.08.2006
(73) Proprietor: HTC Corporation, Taoyuan County 330 (TW)
(72) Inventor: Wang, John C., Taoyuan City Taoyuan Hsien (TW)
(74) Representative: Schwabe - Sandmair - Marx

(56) References cited:
- US-A1- 2001 055 017
- US-B1- 6 784 925
- A. BROUWER: "The FAT filesystem: FAT" TU EINDHOVEN, PERSONAL WEBSPACE, [Online] 29 December 2004 (2004-12-29), pages 1-7, XP002501246 Retrieved from the Internet: URL:http://web.archive.org/web/20041229090 220/http://www.win.tue.nl/~aeb/linux/fs/fa t/fat-1.html> [retrieved on 2008-10-27]

## Description

### Field of Invention

The present invention relates to a data management method. More particularly, the present invention relates to a data management method between a mass storage device and a data capture/storage device.

### Description of Related Art

With the advance in digital consumer electronics, digital capture/storage devices, such as digital cameras and digital recorders, have become even more popular and pervasive. However, because of cost considerations, most digital capture/storage devices are equipped with only a small-capacity memory for temporary storage. Once the storage is full, the user has to transfer the stored data to a mass storage device, such as a hard disk or a CD-ROM, before he can further store new data.

For example, when using the digital camera to take pictures, the user has to transfer the captured images from the digital camera to a personal computer for storage from time to time. If the user doesn't perform this backup procedure routinely, he may not have enough storage capacity to save new images at some point in the future. When the camera runs out of available storage, the user may delete old images to free up additional storage space. However, the user may have a problem recalling which pictures in the digital camera have already been saved on the personal computer and therefore may be deleted, and which ones haven't. Consequently, the user may accidentally delete images that should have been retained. As a result, these images are irrecoverably lost.

Further compounding the problem, when the user wants to backup the images in the digital camera to the personal computer, he or she often has to execute particular software for image transfer or management. The operation of the software may be complicated, particularly for persons who are not conversant with computer operations. Additionally, the user often has to select the images to transfer and then manually erase images just transferred. If the user doesn't immediately erase the transferred images in the digital camera, he or she may later have difficulty remembering which images have already been transferred and which have not. The traditional media management practice as described is inconvenient and inflexible.

US 6,784,925 B1 discloses a system for managing files stored on a digital camera which is able to automatically receive thumbnail image files which are stored in a digital camera.

A. Brouwer, The FAT Filesystem, TU Eindhoven, Personal Webspace, Document ID XP002501246 gives an in-depth account of file management in an FAT file system.

### SUMMARY

For the forgoing reasons, there is a need for an improved data management method so the user can manage data between a data capture/storage device and a mass storage device more easily and conveniently. Using this method, the user doesn't have to perform the backup procedure manually, and accidental deletion can be avoided.

It is therefore an objective of the present invention to provide a data management method between a mass storage device and a data capture/storage device.

It is another objective of the present invention to provide a data capture/storage device having a data management function.

In accordance with the foregoing and other objectives of the present invention, a data management method is proposed. First, a connection signal is generated when a data capture/storage device is connected to a mass storage device. Then, data files in the data capture/storage device are transferred to the mass storage device via a transfer medium when the mass storage device and the data capture/storage device receive a connection signal. A first marker is then added to the data files in the data capture/storage device, so the transferred data files can be differentiated from the not-yet transferred.

A second marker is added to certain data files in the data capture/storage device. The data files having the first marker and not the second marker are deleted in the data capture/storage device.

According to another objective of the present invention, a data capture/storage device having a data management function is proposed. The data capture/storage device includes a processing unit, a detection unit, and a transfer unit. The detection unit connects to the processing unit for detecting the connection between the data capture/storage device and a mass storage device. When the data capture/storage device connects to the mass storage device, the detection unit generates a connection signal. The transfer unit also connects to the processing unit. When the processing unit receives the connection signal, the transfer unit transfers data files in the data capture/storage device to the mass storage device via a transfer medium. The processing unit adds a first marker to each of the copied data files in the data capture/storage device and adds a second marker to certain data files in the data capture/storage device and deletes the data files having the first marker and not the second marker in the data capture/storage device.

According to the present invention, transferring the data files in the data capture/storage device to a mass storage device can occur automatically, so that the data files in the data capture/storage device can be transferred to the mass storage device without additional manual intervention, and subsequent erroneous deletion of not-yet transferred data files in the data capture/storage device can be avoided. Furthermore, the user can retain the preferred data files in the data capture/storage device by adding a second marker. The data files with the second marker are not erased when the user performs the deletion function, even if such data files have already been transferred to the mass storage device and therefore bear the first marker.

It is to be understood that both the foregoing general description and the following detailed description are examples, and are intended to provide further explanation of the invention as claimed.

### BRIEF DESCRIPTION OF THE DRAWINGS

These and other features, aspects, and advantages of the present invention will become better understood with regard to the following description, appended claims, and accompanying drawings, where:
Fig. 1 is a flowchart illustrating data management according to the present invention;
Figs. 2 to 10 are drawings illustrating one preferred embodiment of the present invention; and
Fig. 11 is a block diagram illustrating the data capture/storage device according to the present invention.

### DESCRIPTION OF THE PREFERRED EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

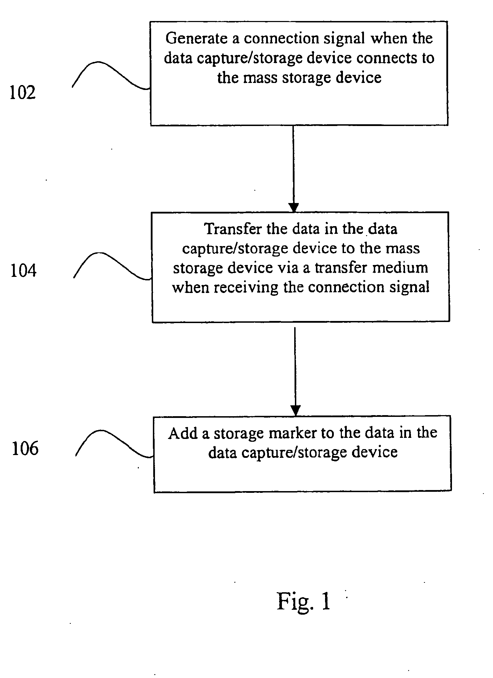

Fig. 1 is a flowchart illustrating a data management method according to the present invention. The data management method according to the present invention is employed to manage data files between the mass storage device and the data capture/storage device. The storage capacity of the mass storage device is preferably at least ten times that of the data capture/storage device. The data capture/storage device stores data files captured by the user, and a first marker can be added to the data files.

The data management method according to the present invention can automatically backup data files in the data capture/storage device to a mass storage device. Additionally, by adding a first marker to the data files when the backup process takes place, the backed-up and not yet backed-up data files can be distinguished to prevent the erroneous deletion of the not yet backed-up data files.

The first step of the data management method according to the present invention is to generate a connection signal when the data capture/storage device connects to the mass storage device (step 102). Then, the data files in the data capture/storage device are transferred to the mass storage device via a transfer medium when receiving the connection signal (step 104). A first marker is then added to the data files in the data capture/storage device (step 106).

The user can delete the data files tagged with the first marker by a command. Alternatively, whenever more storage space is needed on the data capture/storage device, those tagged with the first marker are deleted automatically. Therefore, the user doesn't have to perform the backup and the deletion procedures manually.

Furthermore, the user can retain the preferred data files in the data capture/storage device by adding a second marker. The data files tagged with the second marker are not deleted, even if already tagged with the first marker. This way, the user can preserve the desired data files in the data capture/storage device.

The data capture/storage device can be a digital image capture/storage device, such as a digital camera, a camera PDA, a camera mobile phone, a data scanner, or a bar code scanner. The data capture/storage device can also be a digital voice capture/storage device, such as a digital recorder. Examples of data files include images or video clips.

Examples of mass storage devices include personal computers, servers, network mass storage devices, photo printers with onboard storage, media center mass storage devices, companion picture vaults, or removable mass storage devices.

The transfer media can be wired or wireless. Examples include Firewire (IEEE-1394), serial cable, WiFi wireless, Bluetooth wireless, or Internet. Further, a recharging cable, such as a recharging USB cable, can also be employed. The data management can be incorporated into the recharging process such that when the user uses the recharging USB cable for recharging the data capture/storage device, the management task can also be launched at the same time.

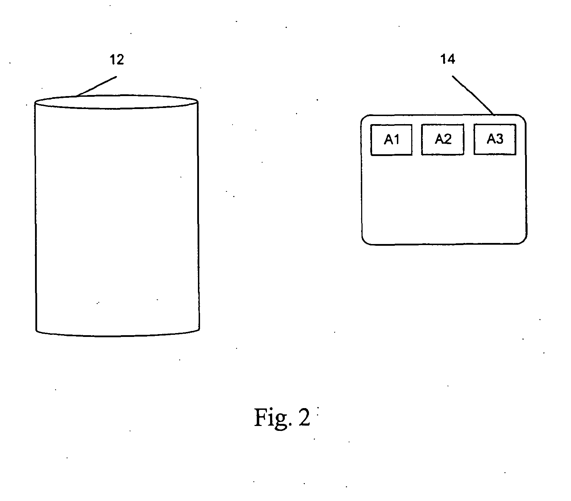

Figs. 2 to 10 are drawings illustrating the preferred embodiment according to the present invention. In the preferred embodiment, the data management method according to the present invention is employed between a personal computer 12 and a digital camera 14. As shown in Fig. 2, there are three digital images A1, A2, and A3 in the digital camera 14. The three digital images are copied to the personal computer 12 for storage.

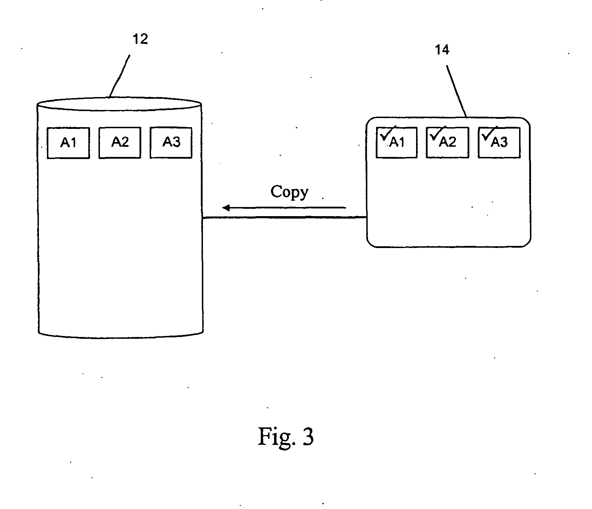

As shown in Fig. 3, when the digital camera 14 is connected to the personal computer 12, the digital images A1, A2, and A3 are copied to the personal computer 12 for storage. Meanwhile, a first marker is added to the digital images A1, A2, and A3 in the digital camera 14. Digital images with first markers represent digital images that have already been copied to the personal computer 12.

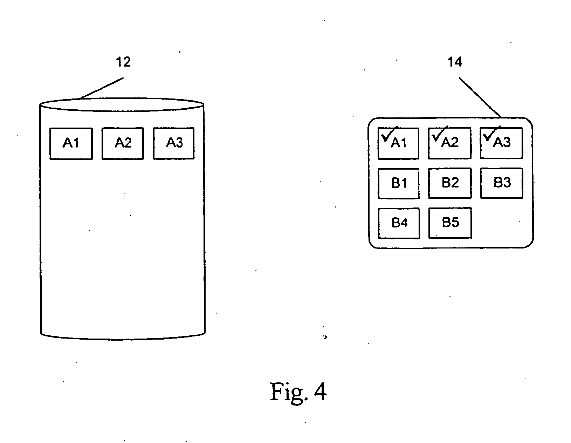

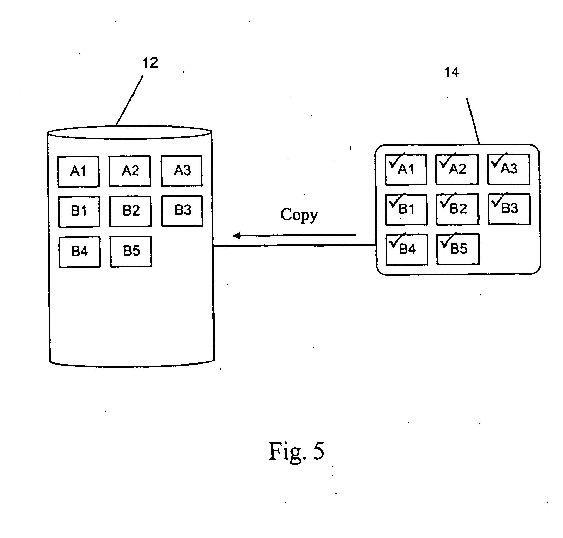

Next, as depicted in Fig. 4, the user uses the digital camera 14 for capturing additional digital images B1 to B5. When the user connects the digital camera 14 to the personal computer 12 again, digital images B1 to B5 without the first marker are added to the personal computer. Afterward, the first marker is also added to the digital images B1 to B5 in the digital camera 14, as shown in Fig. 5.

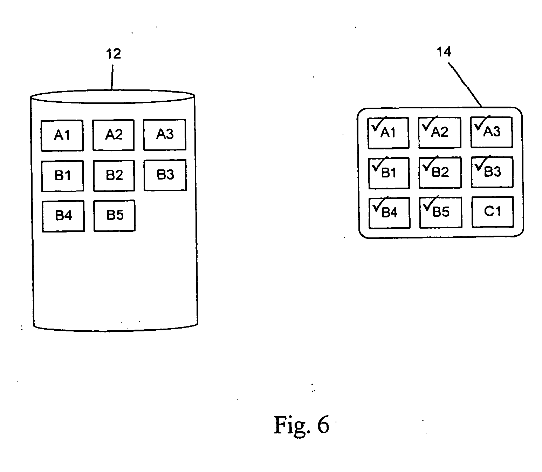

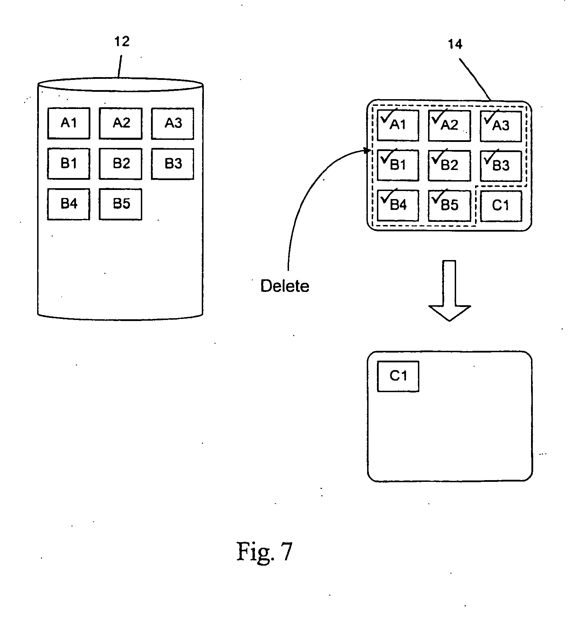

Fig. 6 shows that the storage capacity of the digital camera 14 is almost full when the user intends to capture more digital images. After saving the digital image C1, no more digital images can be captured and saved to the digital camera 14. As shown in Fig. 7, the user now can execute the delete function in the digital camera 14, and only the digital images with the first marker, such as A1 to A3 and B1 to B5, are deleted. The digital image C1, which is not designated with a first marker, is not deleted when the deletion function is performed. This mechanism guarantees that the not-yet-copied digital images are never mistakenly deleted.

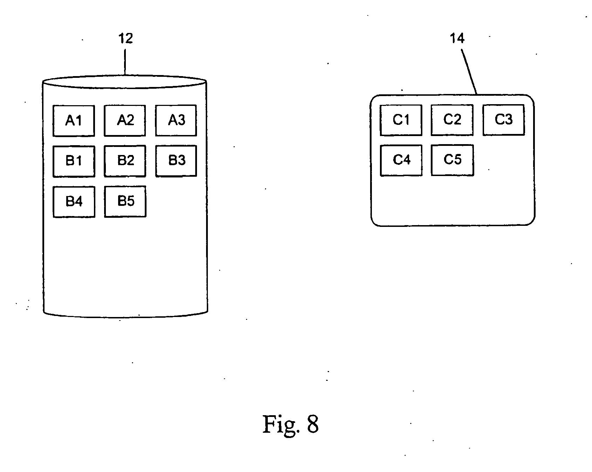

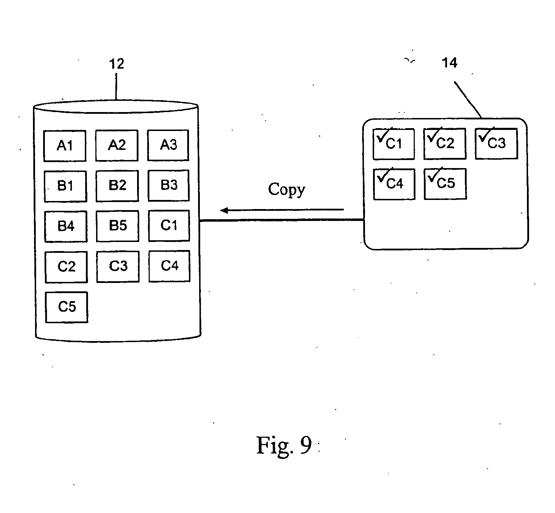

After executing the delete function, digital images with the first marker are deleted, and more storage capacity in the digital camera 14 is subsequently released for storing new digital images C2 to C5, as shown in Fig. 8. Next, in Fig. 9, when the user connects the digital camera 14 to the personal computer 12 again, the digital images C1 to C5 in the digital camera 14 are copied to the personal computer 12, and the first marker is added to the digital images C1 to C5.

Furthermore, the user can retain preferred digital images by adding a second marker. Digital images with the second marker are not deleted, whether or not the "locked" digital images have previously been copied to the personal computer 12. This way, the user can preserve the desired digital images in the digital camera 14, at least until the digital images are unlocked.

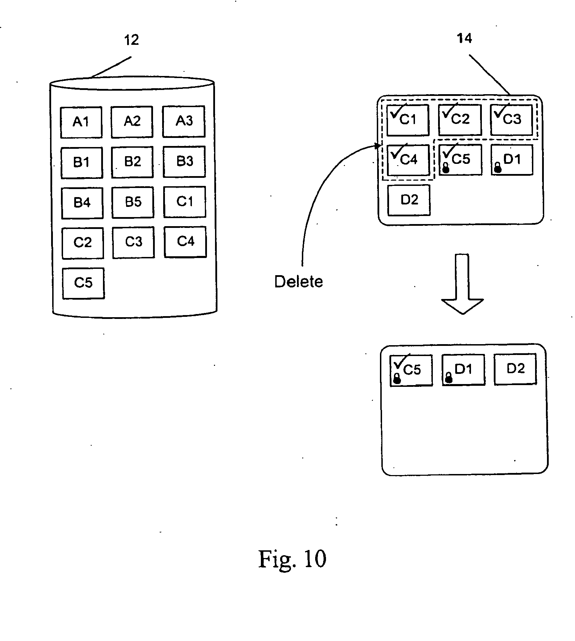

As shown in Fig. 10, if the user would like to retain the digital images C5 and D1 in the digital camera 14, he can add the second marker to those two digital images. When the user executes the delete function, only digital images C1 to C4 with the first marker but without the second marker are deleted.

Further, the deletion of the digital images with the first marker in the digital camera 14 can be performed automatically. For example, each time the digital camera 14 is connected to the personal computer 12 or each time the memory is full, the digital camera 14 automatically checks and deletes the digital images with the first marker. Therefore, the user does not have to perform the deletion function manually.

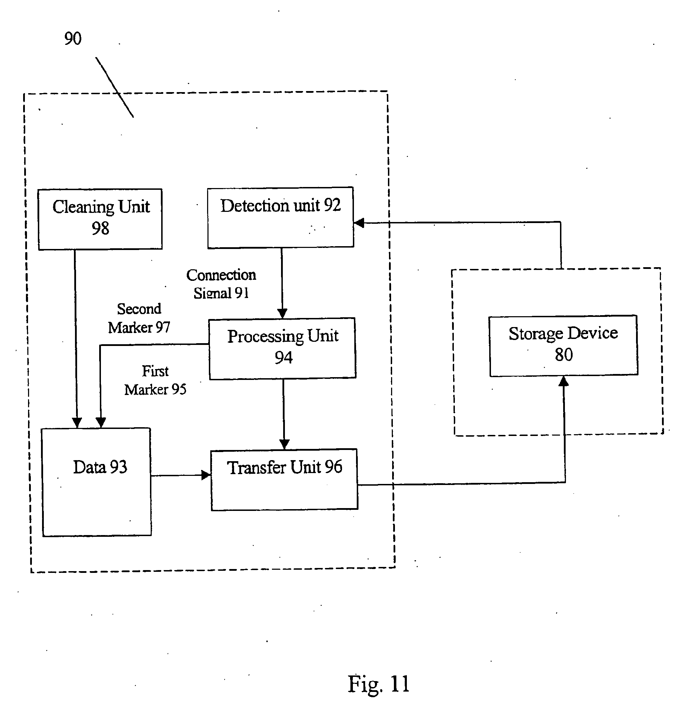

Fig. 11 is a block diagram illustrating the data capture/storage device according to the present invention. The data capture/storage device 90 has the data management function and includes a detection unit 92, a processing unit 94, and a transfer unit 96. The detection unit 92 connects to the processing unit 94 and detects the connection between the data capture/storage device 90 and a mass storage device 80. When the data capture/storage device 90 is connected to the mass storage device 80, the detection unit 92 generates a connection signal 91. The transfer unit 96 also connects to the processing unit 94. When the processing unit 94 receives the connection signal 91, the transfer unit 96 transfers the data files 93 in the data capture/storage device 90 to the mass storage device 80 via a transfer medium. Afterward, the processing unit 94 adds a first marker 95 to the data files 93 that have already been transferred to the mass storage device 80.

The data capture/storage device 90 can further include a cleaning unit 98. When the user triggers the cleaning unit 98, the cleaning unit 98 deletes the data files 93 bearing the first marker 95 in the data capture/storage device 90. Additionally, the processing unit 94 also adds a second marker 97 to the data files 93. The data files 93 with the second marker 97 are exempt from deletion when the user triggers the cleaning unit 98.

The data management method according to the present invention automatically backs up the data files in the data capture/storage device to a mass storage device. Additionally, a first marker is added to the data files in the data capture/storage device, so transferred data files are more easily differentiated from not-yet transferred data. Data files in the data capture/storage device can be transferred to the mass storage device automatically, and mistaken deletion of not yet transferred data files in the data capture/storage device can be avoided. Furthermore, the user can retain the preferred data files in the data capture/storage device by adding a second marker. The data files with the second marker are not erased when the user performs the deletion function, even if the locked data files have already been transferred to the mass storage device.

## Claims

1. A data management method between a mass storage device (80) and a data capture/storage device (90), the data capture/storage device (90) including a plurality of data files, and the method including an option of adding markers (95, 97) to the data files, the data management method comprising the steps of:
generating (102) a connection signal when the data capture/storage device (90) is connected to the mass storage device; and
copying (104) the data files in the data capture/storage device (90) to the mass storage device (80) via a transfer medium when the mass storage device (80) and the data capture/storage device (90) receive the connection signal;
**characterized by** adding (106) the first marker (95) to each of the copied data files in the data capture/storage device;
adding a second marker (97) to certain data files in the data capture/storage device (90); and
deleting the data files having the first marker (95) and not the second marker (97) in the data capture/storage device (90).

2. The data management method of claim 1, wherein the user deletes the data file with the first marker (95) by a command.

3. The data management method of claim 1, wherein the user deletes data files with the first marker (95) but without the second marker (97) by a command when deleting data files in the data capture/storage device (90).

4. A data capture/storage device (90) storing a plurality of data files, the data capture/storage device (90) comprising:
a processing unit (94);
a detection unit (92) connected to the processing unit (94) for detecting a connection between the data capture/storage device (90) and a mass storage device (80), and generating a connection signal when the data capture/storage device (90) connects to the mass storage device (80); and
a transfer unit (96) connecting to the processing unit (94) for copying the data files to the mass storage device (80) via a transfer medium when the processing unit (94) receives the connection signal,
**characterized in that** the processing unit (94) is configured to add a first marker (95) to each of the copied data files stored in the data capture/storage device (90) and to add a second marker (97) to certain data files in the data capture/storage device (90), and to delete the data files having the first marker (95) and not the second marker in the data capture/storage device (90).

5. The data capture/storage device (90) of claim 4, further including a cleaning unit (98), wherein when the cleaning unit (98) is triggered, the data files with the first marker (95) in the data capture/storage device (90) are deleted.

6. The data capture/storage device (90) of claim 4, wherein the data capture/storage device (90) is a digital camera (14), a camera PDA, a camera mobile telephone, a data scanner, or a bar code scanner.

7. The data capture/storage device (90) of claim 4, wherein the mass storage device (80) is a personal computer (12), a server, a network mass storage device, a photo printer with onboard storage, a media center mass storage device, a companion picture vault, or a removable mass storage device.

8. The data capture/storage device (90) of claim 4, wherein the transfer medium is wired, wireless, USB (Universal Serial Bus), Firewire (IEEE-1394), a serial cable, WiFi wireless, Bluetooth wireless, or Internet.

## Patentansprüche

1. Datenverwaltungsverfahren zwischen einer Massenspeichereinrichtung (80) und einer Datenerfassungs-/Speichereinrichtung (90), wobei die Datenerfassungs-/Speichereinrichtung (90) eine Mehrzahl Datendateien enthält und das Verfahren eine Option zum Hinzufügen von Markern bzw. Markierungen (95, 97) zu den Datendateien enthält, wobei das Datenverwaltungsverfahren folgende Schritte enthält:
Erzeugen (102) eines Verbindungssignals, wenn die Datenerfassungs-/Speichereinrichtung (90) mit der Massenspeichereinrichtung verbunden ist; und
Kopieren (104) der Datendateien in der Datenerfassungs-/Speichereinrichtung (90) auf die Massenspeichereinrichtung (80) über ein Transfermedium, wenn die Massenspeichereinrichtung (80) und die Datenerfassungs-/Speichereinrichtung das Verbindungssignal empfangen;
**Gekennzeichnet durch** Hinzufügen (106) des ersten Markers (95) zu jeder der kopierten Datendateien in der Datenerfassungs-/Speichereinrichtung;
Hinzufügen eines zweiten Markers (97) zu bestimmten Datendateien in der Datenerfassungs-/Speichereinrichtung (90); und
Löschen der Datendateien in der Datenerfassungs-/Speichereinrichtung (90), die den ersten Marker (95) und nicht den zweiten Marker (97) aufweisen.

2. Datenverwaltungsverfahren gemäß Anspruch 1, bei dem der Nutzer die Datendateien mit dem ersten Marker (95) mittels eines Befehls löscht.

3. Datenverwaltungsverfahren gemäß Anspruch 1, bei dem der Nutzer die Datendateien mit dem ersten Marker (95) aber ohne den zweiten Marker (97) mittels eines Befehls löscht, wenn Datendateien in der Datenerfassungs-/Speichereinrichtung (90) gelöscht werden.

4. Datenerfassungs-/Speichereinrichtung (90), die eine Mehrzahl Datendateien speichert, wobei die Datenerfassungs-/Speichereinheit (90) enthält:
eine Verarbeitungseinheit (94);
eine Detektionseinheit (92), die mit der Verarbeitungseinheit (94) zum
Detektieren einer Verbindung zwischen der Datenerfassungs-/Speichereinheit und einer Massenspeichereinrichtung (80) verbunden ist und ein Verbindungssignal erzeugt, wenn sich die Datenerfassungs-/Speichereinrichtung (90) mit der Massenspeichereinrichtung (80) verbindet; und
eine Transfereinheit (96), die sich mit der Verarbeitungseinheit (94) zum
Kopieren der Datendateien zu der Massenspeichereinrichtung (80) über ein Transfermedium verbindet, wenn die Verarbeitungseinheit (94) das Verbindungssignal empfängt,
**dadurch gekennzeichnet, dass** die Verarbeitungseinheit (94) eingerichtet ist,
einen ersten Marker bzw. eine erste Markierung (95) zu jeder der kopierten Datendateien, die in der Datenerfassungs-/Speichereinrichtung gespeichert sind, hinzuzufügen und einen zweiten Marker bzw. eine zweite Markierung (97) zu bestimmten Datendateien in der Datenerfassungs-/Speichereinrichtung (90) hinzuzufügen und die Datendateien, die den ersten Marker (95) und nicht den zweiten Marker aufweisen, in der Datenerfassungs-/Speichereinheit (90) zu löschen.

5. Datenerfassungs-/Speichereinrichtung (90) gemäß Anspruch 4, die ferner eine Reinigungseinheit (98) enthält, wobei, wenn die Reinigungseinheit (98) ausgelöst wird, die Datendateien mit dem ersten Marker (95) in der Datenerfassungs-/Speichereinrichtung (90) gelöscht werden.

6. Datenerfassungs-/Speichereinrichtung (90) gemäß Anspruch 4, wobei die Datenerfassungs-/Speichereinrichtung (90) eine Digitalkamera (14), ein Kamera-PDA, ein Kameramobiltelefon, ein Datenscanner oder ein Strichcodescanner ist.

7. Datenerfassungs-/Speichereinrichtung (90) gemäß Anspruch 4, bei der die Massenspeichereinrichtung (80) ein Personalcomputer (12), ein Server, eine Netzwerkmassenspeichereinrichtung, ein Fotodrucker mit Onboardspeicher, eine Medienzentrummassenspeichereinrichtung, ein Mitnahmefotoalbum oder eine entfernbare Massenspeichereinrichtung ist.

8. Datenerfassungs-/Speichereinrichtung (90) gemäß Anspruch 4, bei der das Transfermedium drahtgebunden, drahtlos, USB (Universal Serial Bus), Firewire (IEEE-1394), ein serielles Kabel, WiFi-Wireless, Bluetooth-Wireless oder das Internet ist.

## Revendications

1. Procédé de gestion de données entre un dispositif de stockage de masse (80) et un dispositif d'acquisition/stockage des données (90), le dispositif d'acquisition/stockage de données (90) comprenant une pluralité de fichiers de données, et le procédé comprenant une option d'ajout de marqueurs (95, 97) aux fichiers de données, le procédé de gestion de données comprenant les étapes de :
la génération (102) d'un signal de liaison lorsque le dispositif d'acquisition/stockage de données (90) est relié au dispositif de stockage de masse ; et
la copie (104) des fichiers de données du dispositif d'acquisition/stockage de données (90) dans le dispositif de stockage de masse (80) par l'intermédiaire d'un support de transfert lorsque le dispositif de stockage de masse (80) et le dispositif d'acquisition/stockage de données (90) reçoivent le signal de liaison ;
**caractérisé par** l'ajout (106) du premier marqueur (95) à chacun des fichiers de données copiés dans le dispositif d'acquisition/stockage de données ;
l'ajout d'un deuxième marqueur (97) à certains fichiers de données dans le dispositif d'acquisition/stockage de données (90) ; et
la suppression des fichiers de données ayant le premier marqueur (95) et n'ayant pas le deuxième marqueur (97) dans le dispositif d'acquisition/stockage de données (90).

2. Procédé de gestion de données selon la revendication 1, dans lequel l'utilisateur supprime le fichier de données avec le premier marqueur (95) par une commande.

3. Procédé de gestion de données selon la revendication 1, dans lequel l'utilisateur supprime les fichiers de données avec le premier marqueur (95) mais sans le deuxième marqueur (97) par une commande lors de la suppression de fichiers de données dans le dispositif d'acquisition/stockage de données (90).

4. Dispositif d'acquisition/stockage de données (90) stockant une pluralité de fichiers de données, le dispositif d'acquisition/stockage de données (90) comprenant :
une unité de traitement (94) ;
une unité de détection (92) reliée à l'unité de traitement (94) pour détecter une liaison entre le dispositif d'acquisition/stockage de données (90) et un dispositif de stockage de masse (80), et la génération d'un signal de liaison lorsque le dispositif d'acquisition/stockage de données (90) se relie au dispositif de stockage de masse (80) ; et
une unité de transfert (96) se reliant à l'unité de traitement (94) pour copier les fichiers de données dans le dispositif de stockage de masse (80) par l'intermédiaire d'un support de transfert lorsque l'unité de traitement (94) reçoit le signal de liaison,
**caractérisé en ce que** l'unité de traitement (94) est configurée pour ajouter un premier marqueur (95) à chacun des fichiers de données copiés stockés dans le dispositif d'acquisition/stockage de données (90) et pour ajouter un deuxième marqueur (97) à certains fichiers de données dans le dispositif d'acquisition/stockage de données (90), et pour supprimer les fichiers de données ayant le premier marqueur (95) et n'ayant pas le deuxième marqueur dans le dispositif d'acquisition/stockage de données (90).

5. Dispositif d'acquisition/stockage de données (90) selon la revendication 4, comprenant en outre une unité de nettoyage (98), dans lequel lorsque l'unité de nettoyage (98) est déclenchée, les fichiers de données avec le premier marqueur (95) dans le dispositif d'acquisition/stockage de données (90) sont supprimés.

6. Dispositif d'acquisition/stockage de données (90) selon la revendication 4, dans lequel le dispositif d'acquisition/stockage de données (90) est une caméra numérique (14), un PDA à caméra, un téléphone mobile à caméra, un scanner de données ou un scanner de codes-barres.

7. Dispositif d'acquisition/stockage de données (90) selon la revendication 4, dans lequel le dispositif de stockage de masse (80) est un ordinateur personnel (12), un serveur, un dispositif de stockage de masse en réseau, une imprimante photo avec mémoire intégrée, un dispositif de stockage de masse de centre multimédia, un coffre à photos d'accompagnement, ou un dispositif de stockage de masse amovible.

8. Dispositif d'acquisition/stockage de données (90) selon la revendication 4, dans lequel le support de transfert est câblé, sans fil, USB (Universal Serial Bus), Firewire (IEEE-1394), un câble série, sans fil Wifi, sans fil Bluetooth, ou Internet.
